# EUROPEAN PATENT APPLICATION

(11) **EP 1 492 109 A1**
(43) Date of publication of application: **29.12.2004**
(21) Application number: 04002930.8
(22) Date of filing: 10.02.2004
(51) Int. Cl.: G11B 20/10, G11B 27/034, H04N 5/76

(54) **Recording interruption preventing device**

(30) Priority: 28.02.2003 JP 2003053254
(71) Applicant: Orion Electric Company, Ltd., Takefu-shi, Fukui-ken (JP)
(72) Inventor: Shimizu, Yasuhiro, Takefu-shi Fukui-ken (JP)
(74) Representative: Kirschner, Klaus Dieter, Dipl.-Phys.

(57) **Abstract**

When a content title recorded on a storage medium is automatically deleted to secure a space for recording an additional title, deletion of the title can occur contrary to user's intention. Storage schedules for recorded content titles, especially the storage schedules concerning operations for the content titles are initialized, and a content title set to have no storage schedule is preferentially automatically deleted. Thus, the recorded content is not deleted contrary to the user's intention.

## Description

The present invention relates to a recording interruption preventing device in which when a content title is recorded on a large capacity recording storage medium, a content title the keeping of which is unnecessary, is automatically deleted, so that sufficient recording space is secured in the storage medium to prevent recording from being interrupted because of insufficient space of the storage medium.

It is known that when a content title is newly recorded on a large capacity recording storage medium, in order to prevent recording from being interrupted when a free space of the storage medium reaches a certain value as a result of accumulative storage of content titles, a recorded content title is deleted to newly secure a space for recording, so that the recording interruption can be prevented. For example, in JP-A-2001-167522, when a free space reaches such a value that contents of 15 minutes can only be recorded, securing of a new recording area is performed by detecting, among viewed content titles, one with the oldest recording date and automatically deleting it, and the recording can be performed without interruption. However, in the case where there is a content title which has been viewed but the recording of which a user desires to keep, it is deleted according to this disclosed technique, which is inconvenient. In order to prevent a content title, the deletion of which is not desired, from being deleted, as disclosed in JP-A-2002-112150, JP-A-2002-100158 and JP-A-11-127396, it is conceivable that before the deletion, a content title of a deletion candidate is exhibited to a user. However, according to this, a recording interruption preventing function can not be automatically performed. Besides, JP-A-2002-44584 discloses that recording interruption prevention is carried out by setting a deletion candidate flag on a content title and by performing deletion. Also in this method, viewing dates of content titles are read, and deletion candidate flags are merely set on titles in order of oldness thereof, and titles are merely automatically deleted in descending order of probability that a user accepts deletion. Thus, in the automatic deletion technique disclosed in this publication, there is a possibility that a title, the deletion of which is not desired, is deleted.

The present invention has an object to provide a recording interruption preventing device in which deletion of content for securing a space in a storage medium is automatically performed, and deletion of a content title is not performed contrary to user's intention.

This object is achieved by the method and the system of the independant claims. Advantageous embodiments of the invention are characterized in the sub-claims.

In order to achieve the object of the invention, a recording interruption preventing device of the invention comprises digital large capacity storage means, means for recording a content title on the digital large capacity storage means, means for performing a user operation to the recorded content title, means for detecting a recordable space of the digital large capacity storage means, judging whether the detected recordable space is not larger than a predetermined space, and generating a judgment signal when it is not larger than the space, means for initializing a storage schedule variable for the content title, means for detecting the storage schedule variable in response to the judgment signal, and means for deleting the content title from the digital large capacity storage means in accordance with the storage schedule variable detected by the detection means.

Advantageous embodiments of the invention are now described with reference to the drawings in which:
Fig. 1 is a block diagram of a HDD recorder embodying a recording interruption preventing device according to the invention.
Fig. 2 is a flowchart diagram showing a procedure of automatic deletion of the recording interruption preventing device of the invention.
Fig. 3 is a flowchart diagram showing a procedure of storage schedule initial setting of the recording interruption preventing device of the invention.
Figs. 4A to 4C are flowchart diagrams showing procedures of storage schedule setting of the recording interruption preventing device of the invention, respectively.

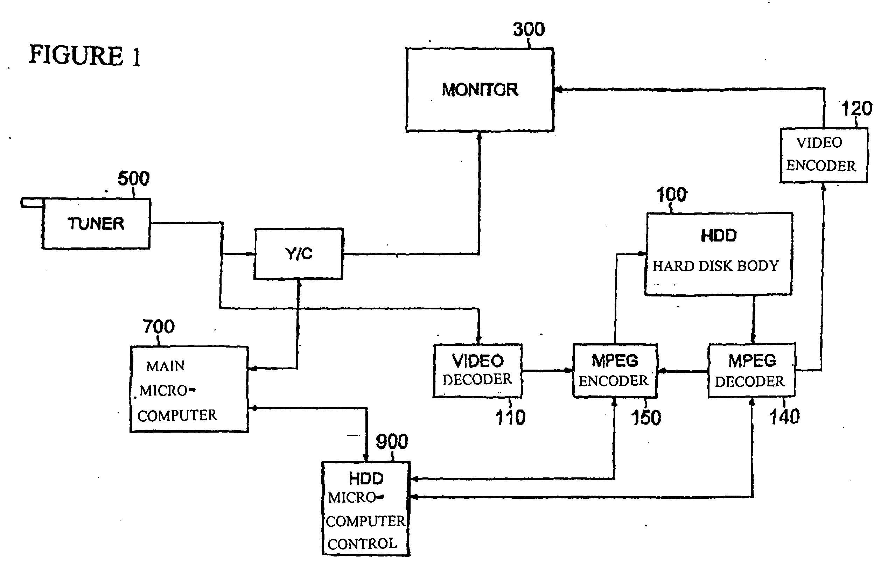

The recording interruption preventing device of the invention, for example, can be incorporated into an HDD recorder shown in Fig. 1. The HDD recorder roughly includes a hard disk device 100 for storing a content title obtained from a broadcast, a tuner 500 for receiving the content title from a broadcast signal, a monitor 300 for viewing the content title, and signal control means 110, 120, 140 and 150 for recording and reproducing the content title with respect to the hard disk device 100. The signal control means include a video decoder 110 for digitizing a video signal expressing the content title, an MPEG encoder 150 for compressing the digitized video signal to store it into the hard disk device, an MPEG decoder 140 for decoding the MPEG-compressed video signal, and a video decoder 120 for converting the digital video signal into an analog signal. A microcomputer 900 for controlling the hard disk device is provided. These signal control means are controlled by this, and recording and reproduction of the video signal with respect to the hard disk device is performed. A main microcomputer 700 for controlling and executing the whole operation of the HDD recorder is separately provided. The main microcomputer 700 controls the microcomputer for controlling the hard disk device as the need arises.

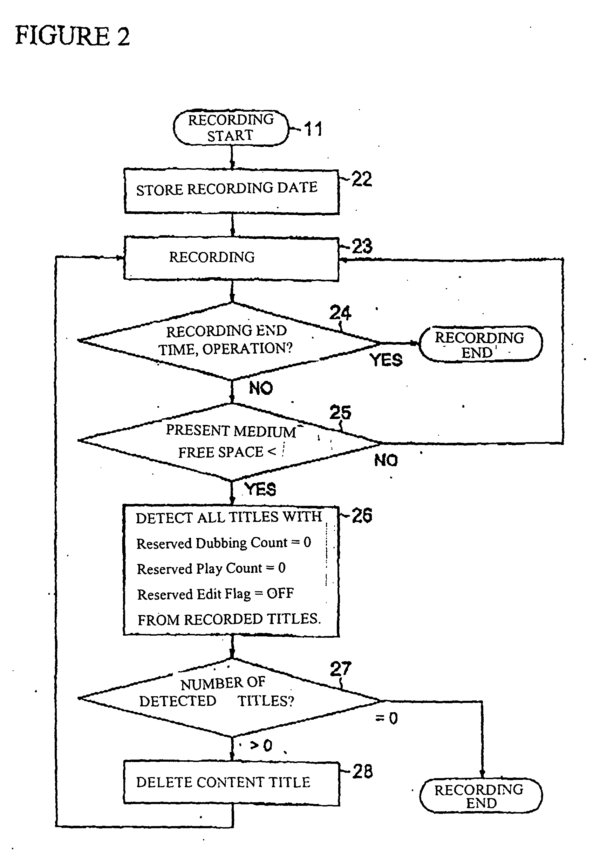

The embodiment of this invention can be realized as software installed in these microcomputers. As shown in a flowchart of Fig. 2, a recordable space of the hard disk device 100 is detected, and it is judged whether or not the detected recordable space is not larger than a predetermined space (25). A user starts a recording operation (11), and inputs a recording date (22), and after the recording operation (23) is started by, for example, pressing a recording button, this judgment is repeatedly executed until a recording end time (24). When it is judged before the recording end time that the recordable space becomes not larger than a predetermined space at which deletion of a recorded content title is necessary, a search is made through contents of storage schedule variables set for content titles, that is, the number of times of scheduled dubbing operation (Reserved Dubbing Count), the number of times of scheduled viewing (Reserved Play Count), and a flag (Reserved Edit Flag) indicating whether editing is scheduled, so that detection (26) of a recorded content title is performed in which the storage schedule variable has no content, that is, the storage schedule variable is zero or is off. In the case where a content title in which the storage schedule variable has no content is not detected, the recording is ended. In the case where a content title in which the storage schedule variable has no content is detected, the detected content title is automatically deleted (28) in order of oldness of recording date. In this way, after the automatic deletion, the recording operation is continued without being interrupted. In this case, a content title may be deleted in order of oldness of viewing date. On an initial setting screen, a user can choose which of the recording date and the viewing data is applied as the deletion condition. The storage schedule variable is previously set by the user in accordance with a schedule of an operation to the content title, and the content title without such a schedule is detected by the procedure as set forth above and is automatically deleted to prevent the recording interrupt, and therefore, automatic deletion against the user's intention is not performed.

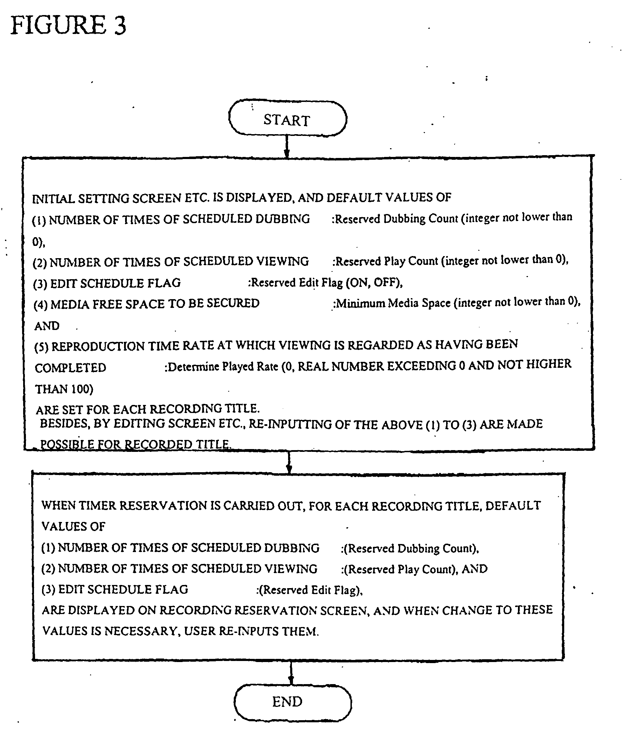

As in a flowchart shown in Fig. 3, the setting of the storage schedule variable is made for each record content title on an initial setting screen at power-on of the HDD recorder, and on a recording schedule setting screen. As shown in Fig. 3, the kind of an operation which a user desires to perform to the content title after recording of the storage schedule variable and the number of times thereof can be initialized on the initial setting screen at the power-on of the HDD recorder. According to a preferred embodiment, the operation includes dubbing, viewing and editing. Particularly, for a specific content title, the user can set the number of times of dubbing operation (Reserved Dubbing Count), the number of times of viewing (Reserved Play Count), and a flag (Reserved Edit Flag) indicating whether editing is scheduled. As the number of times of scheduled dubbing, 0 or an integer higher than that is inputted. As the number of times of scheduled viewing, 0 or an integer higher than that is inputted. Further, when editing, that is, merging of contents or division thereof is scheduled, the edit schedule flag is set. Incidentally, when the storage schedule variable is initialized, it is possible to set hard disk space (Minimum Media Space) to be secured and a reproduction judgment rate (Determine Played Rate) at which viewing is regarded as having been completed. The hard disk free space (Minimum Media Space) to be secured is the minimum free space as a threshold at which a search of the storage schedule variables is started. Although it may be specified directly by megabytes, it may be specified by hours and minutes of contents which can be reproduced, the number of titles of contents which can be reproduced, or free % of the hard disk. Of course, the hard disk free space (Minimum Media Space) to be secured can be provided by setting the space desired to be secured after deletion. The space to be secured after the deletion can be set by megabytes, % of the total medium space, or viewing hours and minutes corresponding to the space. The reproduction judgment rate (Determine Played Rate) at which viewing is regarded as having been completed is a rate as a reference based on which a specific content title is regarded as having been viewed when it is reproduced in some degree. Although this may be also directly specified by megabytes, a viewing completion amount may be specified by hours and minutes.

Although the initial setting of the above storage schedule variables are made at the power-on of the HDD recorder, a setting box thereof may be provided on a recording reservation screen when a recording reservation is made. Besides, the setting box thereof may be expressed on an editing screen so that these storage schedule variables can be set for a recorded content title.

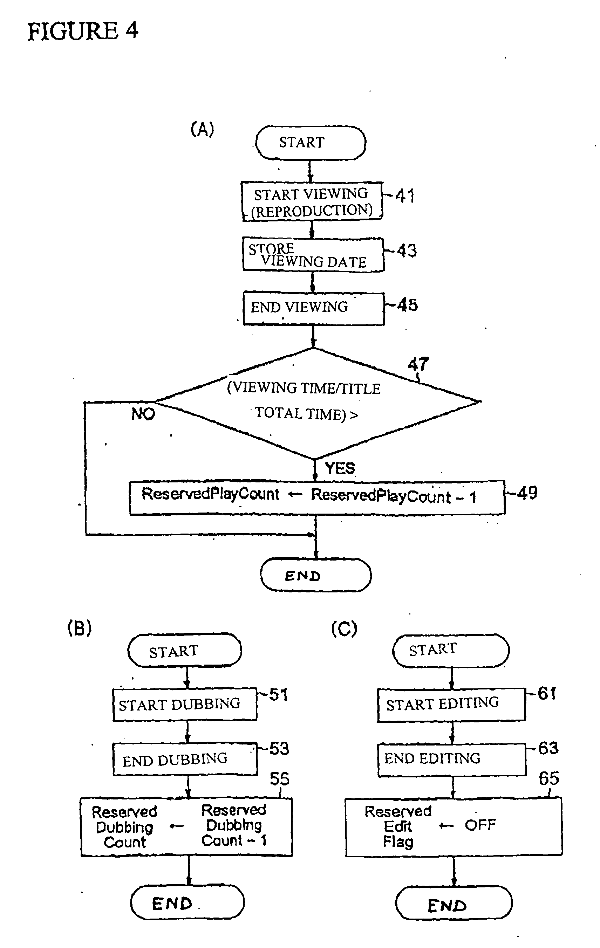

With respect to the storage schedule variables initialized as stated above, when the scheduled operation is actually performed, that is, in this embodiment, when the dubbing operation, viewing, and editing are performed, the contents of the respective corresponding variables are rewritten, so that the execution of the operation is reflected. Figs. 4A to 4C show procedures for realizing that. Fig. 4A shows a rewriting procedure of the number of times of scheduled viewing (Reserved Play Count). That is, in the case where the content title is reproduced, after the viewing is started (41), the date is stored (43), and after the viewing is ended (45), the reproduction judgment rate (Determine Played Rate) and a suitable value of a viewing time as a variable are compared with each other (47), and in the case where it is judged that viewing has been completed, 1 is subtracted from the initialized number of times of scheduled viewing (Reserved Play Count), and the number of times of scheduled viewing is replaced by the count result. For example, when the content title in which the number of times of scheduled viewing is set to 10 on the initial setting screen is viewed once, the number of times of scheduled viewing is changed to 9. Fig. 4B shows a rewriting procedure of the number of times of scheduled dubbing operation (Reserved Dubbing Count). That is, dubbing is started (51), and when this is ended (53), 1 is subtracted from the initialized number of times of scheduled dubbing (Reserved Dubbing Count), and the number of times of scheduled dubbing is replaced by the count result. Fig. 4C shows a rewriting procedure of a flag (Reserved Edit Flag) indicating whether editing is scheduled. When some editing, for example, merging or cutting is started (61), and when this is ended (63), in the case where the edit schedule flag (Reserved Edit Flag) is set to be on, it is inverted to be off. While the edit schedule flag is set to be on, the content title is outside the object of automatic deletion. When the editing is executed, the flag is inverted to be off, and the content title is within the object of automatic deletion.

In this way, with respect to the recorded content title, the variable indicating the schedule of an operation such as viewing, dubbing, or editing is initialized, and a content title having no set variable, that is, zero is first automatically deleted, and therefore, recorded contents are not deleted contrary to the user's intention. Further, when the scheduled operation is actually performed, the variable is rewritten to reflect that. Thus, the variable always expresses the present operation schedule, and deletion by automatic deletion against the user's intention can be prevented more certainly.

## Claims

1. A recording interruption preventing device, comprising:
digital large capacity storage means;
means for recording a content title on the digital large capacity storage means;
user operation means for performing a user operation to the recorded content title;
means for detecting a recordable space of the digital large capacity storage means, judging whether the detected recordable space is not larger than a predetermined space, and generating a judgment signal when it is not larger than the space;
means for initializing a storage schedule variable for the content title;
means for detecting the storage schedule variable in response to the judgment signal; and
deletion means for deleting the content title from the digital large capacity storage means in accordance with the storage schedule variable detected by the detection means.

2. A recording interruption preventing device, comprising:
digital large capacity storage means;
means for recording a content title on the digital large capacity storage means;
user operation means for performing a user operation to the recorded content title;
means for detecting a recordable space of the digital large capacity storage means, judging whether the detected recordable space is not larger than a predetermined space, and generating a judgment signal when it is not larger than the space;
means for initializing a storage schedule variable relating to the user operation for the content title;
means for detecting the storage schedule variable in response to the judgment signal; and
deletion means for deleting the content title from the digital large capacity storage means in accordance with the storage schedule variable detected by the detection means.

3. A recording interruption preventing device according to claim 1 or 2, further comprising count means for counting the number of times that the user operation is performed by the user operation means, wherein the storage schedule variable is changed according to the number of times counted by the count means.

4. A recording interruption preventing device according to any one of claims 1 to 3, wherein the deletion means deletes the detection content title in order of oldness of recording date or viewing date.

5. A recording interruption preventing device according to any one of claims 1 to 4, wherein the user operation is dubbing, reproduction, and/or editing.
